# EUROPEAN PATENT SPECIFICATION

(11) **EP 3 151 680 B1**
(45) Date of publication and mention of the grant of the patent: **28.02.2018**
(21) Application number: 15717919.3
(22) Date of filing: 27.04.2015
(51) Int. Cl.: A23L 5/10, A23L 3/00, A47J 27/10, A47J 27/04

(54) **A COOKING DEVICE WITH A WATER CONTAINER**
KOCHVORRICHTUNG MIT EINEM WASSERBEHÄLTER
DISPOSITIF DE CUISSON ÉQUIPÉ D'UNE CUVE D'EAU

(30) Priority: 06.06.2014 TR 201406532
(43) Date of publication of application: 12.04.2017
(73) Proprietor: Arçelik Anonim Sirketi, 34950 Istanbul (TR)
(72) Inventor: KARATAS, Haluk, 34950 Istanbul (TR); OZYURT, Bekir, 34950 Istanbul (TR)
(86) International application number: PCT/EP2015/059048
(87) International publication number: WO 2015/185285

(56) References cited:
- WO-A1-2013/000790
- WO-A1-2013/170266
- WO-A1-2014/019018

## Description

The present invention relates to a cooking device wherein the cooking process is performed by the sous-vide method.

The cooking method known as sous-vide is realized by placing the foods in vacuum bags and cooking at low temperatures (for example at 60°C) and for long durations (24 - 48 hours) in water. In the sous-vide cooking method, the foods to be cooked are placed raw in vacuum bags and thus the food is prevented from taking in air by isolating from the outside environment. The foods that are packaged by vacuuming are placed into the oven cavities of devices that perform the cooking process by using the sous-vide method. The oven cavities of these devices are filled with water and the foods are enabled to be cooked in the heated water. In the sous-vide method, in order to end the cooking process, the core temperature of the food, the type of food and volume of the food are controlled. The risk of food safety arises when the core temperature of the food remains below a certain value since this causes bacterial growth in these regions. This situation can cause poisoning depending on the medium and conditions the food is stored. Moreover, problems like the user not being able to determine the cooking duration of the food exactly cause the food not being cooked or to be overcooked.

In the state of the art Patent Application No. WO2013000790A1, a cooking device is disclosed which performs the cooking process of foods by means of the sous-vide method, comprising a conductivity sensor that controls water intake of the food and warns the user.

The aim of the present invention is the realization of a cooking device wherein the effectiveness of the cooking process performed by the sous-vide method is improved.

The cooking device realized in order to attain the aim of the present invention and explicated in the claims, is a cooking device wherein cooking is performed by the sous-vide method and comprises an oven cavity enabling the foods to be cooked by filling water therein. The water level inside the oven cavity is detected by the level sensor disposed on the wall of the cavity. As the food is placed into the water filled oven cavity, water level rises as much as the volume of the food. The rise of water is measured by the level sensor and delivered to the control unit. The control unit determines the volume of the food according to the water rise value received from the level sensor. Furthermore, the food core temperature required for the food to be cooked depending on the type of food and the water temperature values predetermined by the producer are recorded in the memory of the control unit. When the user determines the type of food desired to be cooked before the cooking process, the control unit enables the required steps to be performed depending on the determined food volume and the type of food.

In an embodiment of the present invention, the control unit determines the duration required for the food to be cooked by using the food volume calculated according to the water level value received from the level sensor and the food type data the user selected.

In an embodiment of the present invention, the temperature of the water inside the oven cavity is measured by the temperature sensor and transmitted to the control unit. The water temperature is kept at the cooking value suitable for the food type by controlling the heater by the control unit. Thus, the foods are cooked at low temperature, thereby enabling the foods to be healthier and more tasteful.

In an embodiment of the present invention, the level sensor comprises a channel wherein the water in the oven cavity fills, a level determination means that can move freely in the channel and a sensing means. Since the density of the level determination means is less than the density of water, the level determination means stays on the surface of water and follows the water surface level. Thus, the changes that occur at the water level can be determined.

In an embodiment of the present invention, the level determination means is a magnet, and the change in the water level is detected as the sensing means in the level sensor and the level determination means interact, thus the volume of the food is measured.

In an embodiment of the present invention, protrusions are arranged on the heater with circular cross-section that is disposed at the base of the oven cavity. Thus, the surface area of the heater is enlarged and heat transfer is increased.

By means of the present invention, in the cooking device, the food properties suitable for the food type specified by the user and the core temperature are determined and the volume of food is measured by means of the water level sensors, thus the cooking duration suitable for the food type and the measured volume is determined by the control unit. Thus, the problems arising from the food being undercooked or overcooked are prevented.

The cooking device realized in order to attain the aim of the present invention is illustrated in the attached figures, where:

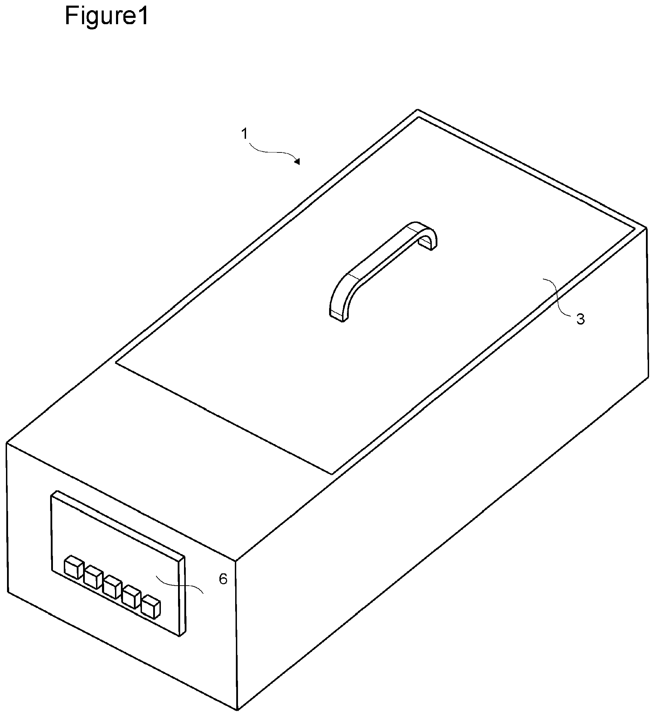

Figure 1 - is the perspective view of a cooking device.

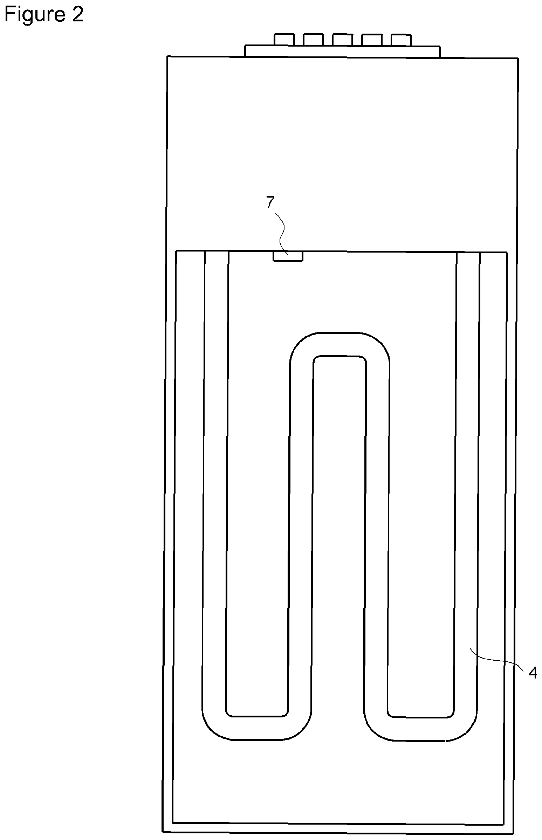

Figure 2 - is the top view of a cooking device.

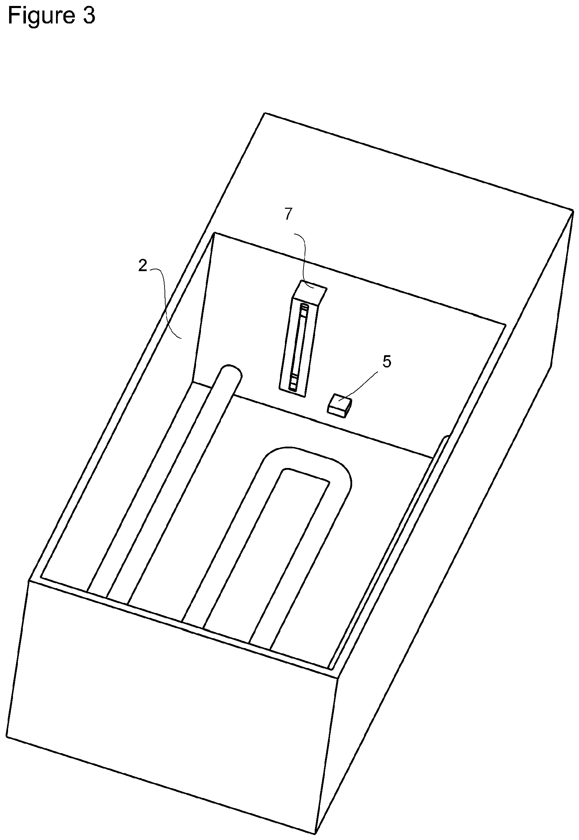

Figure 3 - is the perspective view of a oven cavity.

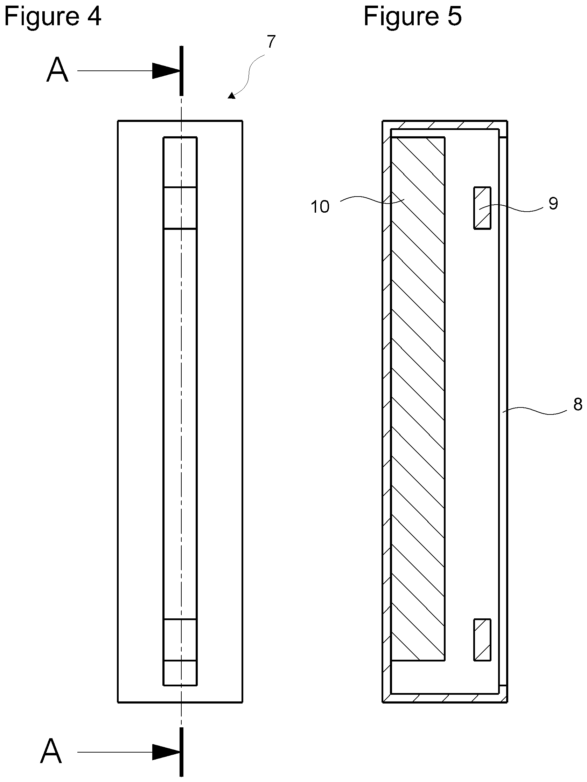

Figure 4 - is the front view of a water level sensor.
Figure 5 - is the view of AA cross-section in Figure 4.

The elements illustrated in the figures are numbered as follows:
1. Cooking device
2. Oven cavity
3. Door
4. Heater
5. Temperature sensor
6. Control unit
7. Level sensor
8. Channel
9. Level determination means
10. Sensing means

The cooking device (1) comprises an oven cavity (2) enabling the foods to be cooked in the water filled therein, a level sensor (7) that is disposed over the oven cavity (2) and that measures the level of water inside the oven cavity (2), and a control unit (6) that detects the food type specified by the user. In the cooking device (1), the foods are cooked in the heated water.

In the cooking device (1) of the present invention, the control unit (6) determines the food volume according to the change in water level originating from the food being placed into the oven cavity (2) that is measured by the level sensor (7), and implements the cooking steps predetermined by the producer according to the determined volume and the specified food type. Thus, foods that are cooked in a healthy manner are served to the user.

In an embodiment of the present invention, the control unit (6) determines the cooking duration according to the food volume measured by means of the level sensor (7) and the food type specified by the user. Thus, undercooking or overcooking of the food is prevented. Furthermore, by determining the cooking duration by the control unit (6), the cooking process is enabled to be completed without opening the door (3) of the device.

In an embodiment of the present invention, the control unit (6) provides that the food core temperature and the water temperature values predetermined by the producer that correspond to the food type specified by the user and the measured food volume are reached. The water and food core temperatures required for the cooking process are very difficult to be determined correctly by the user. Therefore, determination of the food core temperature and the water temperature required for the food to be cooked by the control unit (6) provides ease of utilization.

In an embodiment of the present invention, the cooking device (1) comprises a heater (4) that is disposed over the oven cavity (2); a temperature sensor (5) that measures the temperature of water inside the oven cavity (2), and the control unit (6) that controls the heater (4) according to the temperature value measured by the temperature sensor (5). One of the important properties of the cooking process is to cook the food at low water temperature for a long period of time. The water is kept at a low temperature by controlling the heater (4).

In an embodiment of the present invention, the cooking device (1) comprises the level sensor (7) that has a channel (8) disposed on the side wall of the oven cavity (2) wherein water fills, a level determination means (9) which can move freely inside the channel (8) and a sensing means (10) that provides the detection of the water level by interacting with the level determination means (9). The level sensor (7) is positioned so as to measure the minimum water level. The change in water level is measured by the level sensor (7) and thus the food volume can be determined.

In an embodiment of the present invention, the cooking device (1) comprises the level determination means (9) which is a magnet that interacts with the sensing means (10), thereby enabling a more precise measurement. The level determination means (9) is in interaction with the sensing means (10) along the vertical channel (8) by following the water level.

In an embodiment of the present invention, the cooking device (1) comprises the heater (4) that has fins with circular cross-sections and that is disposed at the base of the oven cavity (2). The surface area is enlarged by means of the fins and the heat transfer from the heater (4) towards the water is increased.

By the present invention, a cooking device (1) is realized that determines the cooking steps according to the food type specified by the user and the amount of food determined by the level sensor (7). By means of the cooking device (1) of the present invention, situations like undercooking and overcooking of the food are prevented since the cooking duration can be determined according to the type and amount of food.

## Claims

1. A cooking device (1) comprising an oven cavity (2) enabling the foods to be cooked in the water filled therein, a level sensor (7) that is disposed over the oven cavity (2) and that measures the level of water inside the oven cavity (2), and a control unit (6) that detects the food type specified by the user, **characterized by** the control unit (6) that determines the food volume according to the change in water level originating from the food being placed into the oven cavity (2) that is measured by the level sensor (7), and implements the cooking steps predetermined by the producer according to the determined volume and the specified food type

2. A cooking device (1) as in Claim 1, **characterized by** the control unit (6) that determines the cooking duration according to the food volume measured by means of the level sensor (7) and the food type specified by the user.

3. A cooking device (1) as in Claim 1 or Claim 2, **characterized by** the control unit (6) that provides that the food core temperature and the water temperature values predetermined by the producer that correspond to the food type specified by the user and the measured food volume are reached

4. A cooking device (1) as in Claim 1 to Claim 3, **characterized by** a heater (4) that is disposed over the oven cavity (2); a temperature sensor (5) that measures the temperature of water inside the oven cavity (2), and the control unit (6) that controls the heater (4) according to the temperature value measured by the temperature sensor (5).

5. A cooking device (1) as in any one of the claim 1 to Claim 4, **characterized by** the level sensor (7) that has a channel (8) disposed on the side wall of the oven cavity (2) wherein water fills, a level determination means (9) which can move freely inside the channel (8) and a sensing means (10) that provides the detection of the water level by interacting with the level determination means (9).

6. A cooking device (1) as in Claim 5, **characterized by** the level determination means (9) which is a magnet that interacts with the sensing means (10), enabling a more precise measurement.

7. A cooking device (1) as in any one of the claim 3 to Claim 6, **characterized by** the heater (4) that has fins with circular cross-sections and that is disposed at the base of the oven cavity (2).

## Patentansprüche

1. Ein Kühlgerät (1) bestehend aus einer Ofenhöhle (2), die ermöglicht, daß Lebensmittel, die im Wasser gekocht werden, hier eingefüllt werden, einem Niveaugeber (7), der angeordnet ist über der Ofenhöhle (2) und bemesst die Wasserhöhe im Innern der Ofenhöhle (2), und einer Kontrolleinheit (6), die wahrnimmt den Lebensmitteltyp spezifiziert vom Verwender, **dadurch gekennzeichnet, daß** die Kontrolleinheit (6) feststellt den Lebensmittelgehalt nach der Veränderung in Wasserhöhe, die entsteht vom Lebensmittel, das hingelegt ist in die Ofenhöhle (2), die bemessen wird vom Niveaugeber (7), und führt aus die Kochschritte vorbestimmt vom Hersteller nach bestimmter Menge und angegebenem Lebensmitteltyp.

2. Ein Kühlgerät (1) nach Anspruch 1, **dadurch gekennzeichnet, daß** die Kontrolleinheit (6) feststellt die Kochzeit nach dem Lebensmittelgehalt bemessen mittels Niveaugeber (7) und Lebensmitteltyp spezifiziert vom Verwender.

3. Ein Kühlgerät (1) nach Anspruch 1 oder Anspruch 2, **dadurch gekennzeichnet, daß** die Kontrolleinheit (6) sicherstellt, daß die Werte der Lebensmittelkerntemperatur und Wassertemperatur, die vom Hersteller vorbestimmt werden, die dem Lebensmitteltyp, der vom Verwender spezifiziert werden, entsprechen und der bemessene Lebensmittelgehalt wird erreicht.

4. Ein Kühlgerät (1) nach Anspruch 1 oder Anspruch 3, **dadurch gekennzeichnet, daß** ein Heizapparat (4) angeordnet ist über die Ofenhöhle (2); einem Temperatursensor (5), der bemesstdie Wassertemperatur im Innern der Ofenhöhle (2), und die Kontrolleinheit (6), die das Heizapparat (4) kontrolliert nach dem Temperaturwert bemessen vom Temperatursensor (5).

5. Ein Kühlgerät (1) nach den vorhergehenden Ansprüche 1 bis 4, **dadurch gekennzeichnet, daß** der Niveaugeber (7) einen Kanal (8) hat, angeordnet auf die Seitenwand der Ofenhöhle (2) wo Wasser einfüllt, ein Niveaufeststellungsmittel (9), das sich freibewegen kann im Innern des Kanals (8) und ein Fühlmittel (10), daß sicherstellt die Wahrnehmung der Wasserhöhe durch Wechselwirkung mit dem Niveaufeststellungsmittel (9).

6. Ein Kühlgerät (1) nach Anspruch 5, **dadurch gekennzeichnet, daß** das Niveaufeststellungsmittel (9), das ein Magnet ist, wechselwirkt mit dem Fühlmittel (10), das eine mehr richtige Bemessung ermöglicht.

7. Ein Kühlgerät (1) nach den vorhergehenden Ansprüche 3 bis 6, **dadurch gekennzeichnet, daß** der Heizapparat (4) Kühlrippen mit kreisförmigen Schnittflächen hat und der angeordnet ist an der Unterlage der Ofenhöhle (2).

## Revendications

1. Dispositif de cuisson (1) comprenant une cavité de four (2) permettant de cuire les aliments dans l'eau qui y est remplie, un capteur de niveau (7) disposé sur la cavité du four (2) et mesurant le niveau d'eau à l'intérieur cavité du four (2), et une unité de commande (6) qui détecte le type d'aliment spécifié par l'utilisateur, **caractérisé par** l'unité de commande (6) qui détermine le volume de nourriture en fonction du changement du niveau d'eau provenant de l'aliment placé dans la cavité du four (2) qui est mesurée par le capteur de niveau (7), et met en oeuvre les étapes de cuisson prédéterminées par le producteur en fonction du volume déterminé et du type d'aliment spécifié.

2. Dispositif de cuisson (1) selon la revendication 1, **caractérisé par** l'unité de commande (6) détermine la durée de cuisson en fonction du volume de nourriture mesuré au moyen du capteur de niveau (7) et du type d'aliment spécifié par l'utilisateur.

3. Dispositif de cuisson (1) selon la revendication 1 ou la revendication 2, **caractérisé par** l'unité de commande (6) fournit les valeurs de température de l'aliment et de température d'eau prédéterminées par le producteur correspondant au type d'aliment spécifié par l'utilisateur et le volume de nourriture mesuré est atteint.

4. Dispositif de cuisson (1) selon les revendications 1 à 3, **caractérisé par** un dispositif de chauffage (4) qui est disposé sur la cavité du four (2); un capteur de température (5) qui mesure la température de l'eau à l'intérieur de la cavité du four (2) et l'unité de commande (6) qui commande le chauffage (4) en fonction de la valeur de température mesurée par le capteur de température (5).

5. Dispositif de cuisson (1) selon l'une quelconque des revendications 1 à 4, **caractérisé par** le capteur de niveau (7) comporte un canal (8) disposé sur la paroi latérale de la cavité du four (2) dans laquelle l'eau se remplit, des moyens de détermination de niveau (9) qui peuvent se déplacer librement à l'intérieur du canal (8) et un moyen de détection (10) qui fournit la détection du niveau d'eau en interagissant avec les moyens de détermination de niveau (9).

6. Dispositif de cuisson (1) selon la revendication 5, **caractérisé par** le moyen de détermination de niveau (9) qui est un aimant qui interagit avec le moyen de détection (10), permettant une mesure plus précise.

7. Dispositif de cuisson (1) selon l'une quelconque des revendications 3 à 6, **caractérisé par** le dispositif de chauffage (4) qui comporte des ailettes à section transversale circulaire et qui est disposé à la base de la cavité du four (2).
